# EUROPÄISCHE PATENTSCHRIFT

(11) **EP 3 178 798 B1**
(45) Veröffentlichungstag und Bekanntmachung des Hinweises auf die Patenterteilung: **25.07.2018**
(21) Anmeldenummer: 16201133.2
(22) Anmeldetag: 29.11.2016
(51) Int. Cl.: C04B 28/18

(54) **PORENBETON UND VERFAHREN ZU SEINER HERSTELLUNG**
POROUS CONCRETE AND METHOD FOR ITS PRODUCTION
BÉTON CELLULAIRE ET SON PROCÉDÉ DE FABRICATION

(30) Priorität: 10.12.2015 DE 102015121553
(43) Veröffentlichungstag der Anmeldung: 14.06.2017
(73) Patentinhaber: Rodgauer Baustoffwerke GmbH & Co. KG, 63110 Rodgau-Dudenhofen (DE)
(72) Erfinder: VOLKMANN, Stephan, 55252 Mainz-Kastel (DE); KOLB, Walter, 63796 Kahl am Main (DE)
(74) Vertreter: Keil & Schaafhausen Patent- und Rechtsanwälte PartGmbB

(56) Entgegenhaltungen:
- EP-A2- 2 824 086
- EP-B1- 2 163 534

## Beschreibung

Die Erfindung betrifft Porenbeton sowie ein Verfahren zu seiner Herstellung. Insbesondere betrifft die Erfindung hydrothermal gehärteten Porenbeton mit einem Feststoffsteggerüst, das aus einem Schaum resultierende oder durch einen Treibprozess erzeugte Poren umgibt. Das Feststoffsteggerüst kann selbst eine Mikroporosität aufweisen, d.h. die die relativ großen Poren umgebenden Stege weisen vergleichsweise kleinere Poren auf.

Unter Porenbeton wird allgemein ein hydrothermal gehärtetes porosiertes Calciumsilikathydrat-Material verstanden, das insbesondere das in einem Hydrothermalprozess erzeugte Mineral Tobermorit aufweist. Die Grundzüge der Herstellung von Porenbeton werden in dem vom Bundesverband Porenbetonindustrie e.V. veröffentlichten "Porenbeton Handbuch" (6. Auflage von 2008) näher beschrieben. Hieraus geht auch hervor, dass Porenbetonelemente, bspw. Plansteine, Planelemente, Planbauplatten oder Mauertafeln aus Porenbeton, abhängig von ihrer Druckfestigkeit, ihrer Rohdichte und ihrer Wärmeleitfähigkeit in unterschiedliche Klassen eingeteilt werden. So weisen Porenbetonplansteine der Festigkeitsklasse 2 eine Steindruckfestigkeit mit einem Mittelwert von 2,5 N/mm² auf. Die Trockenrohdichte derartiger Plansteine der Druckfestigkeitsklasse 2 kann zwischen 350 und 500 kg/m³ betragen. Diese Plansteine können eine Wärmeleitfähigkeit von 0,08 bis 0,14 W/mK erreichen.

Ein solcher Porenbetonstein der Druckfestigkeitsklasse 2 mit einer Rohdichte von 350 kg/m³ soll nach der EP 2 163 534 B1 eine maximale Wärmeleitfähigkeit von 0,09 W/mK aufweisen, wenn das Feststoffsteggerüst über 50 Masse-% 11 Å-Tobermorit aufweist und der Gehalt an Restquarzkörnern auf bis zu 10 Masse-% beschränkt wird. Zur Herstellung dieses Porenbetonmaterials wird vorgeschlagen, als SiO₂-Komponente ein Quarzmehl mit einer spezifischen Oberfläche von mindestens 6000 cm²/g gemessen nach Blaine, sowie Wasser-Feststoff-Werte zwischen 0,7 und 0,95 zu verwenden. Derart feines Quarzmehl ist in der Herstellung durch das aufwendige Aufmahlen jedoch vergleichsweise teuer. Da in Porenbeton zwischen 30 und 40 Masse-% Quarzmehl als Sandschlamm eingesetzt werden, steigen durch die Verwendung des hochfein aufgemahlenen Quarzmehls die Herstellungskosten von Porenbeton signifikant. Ein weiterer Aspekt bei der Verwendung hochfeinen Quarzmehls ist, dass dieses sich teilweise nur durch den Einsatz vergleichsweise hoher Mengen an Wasser ausreichend gut mit den anderen Komponenten mischen lässt. Dies kann allerdings Nachteile in der Verarbeitung der wässrigen Mischung mit sich bringen.

In der DE 100 66 270 B9 wird ein Verfahren zu Herstellung von Porenbeton beschrieben, das zum Ziel hat, ein Stützkorngefüge aus Körnern einer bestimmten Kornfraktion auszubilden, die im fertigen Porenbeton sich nach allen Seiten gegenseitig abstützend angeordnet sind. Zwischen diesen Körnern soll dann eine Matrix aus Calciumsilikathydrat, insbesondere Tobermorit, vorhanden sein. Hierzu wird vorgeschlagen, eine feine SiO₂-Komponente mit einer maximalen Korngröße von 0,06 mm in einem solchen CaO/SiO₂-Molverhältnis einzusetzen, dass bei der Dampfhärtung ein möglichst vollständiger Umsatz dieser feinen SiO₂-Komponente und der CaO-Komponente zu Calciumsilikathydrat-Phasen erfolgt, wobei zusätzlich eine grobe SiO₂-Komponente mit einer Korngröße von bis zu 0,4 mm eingesetzt wird, die dann das Stützkorngefüge ausbilden soll. Ein solches Stützkorngefüge wirkt sich meist positiv auf die Druckfestigkeit des Porenbetons aus. Allerdings entstehen durch das Stützkorngefüge Wärmebrücken, die die Wärmeleitfähigkeit signifikant ansteigen lassen. Die DE 100 66 270 B9 nennt weder zu der Druckfestigkeit, noch zu der Wärmeleitfähigkeit oder der Rohdichte konkrete Kennzahlen.

Grundsätzlich gilt die Verwendung von vergleichsweise grobem Sand in Kombination mit fein aufgemahlenem Quarzmehl in der Prozessführung als schwieriger beherrschbar, weil der grobe Sand innerhalb der wässrigen Mischung sedimentieren kann, was verteilt über seine Höhe zu sehr unterschiedlichen Eigenschaften des Porenbetons führen kann.

Aufgabe der vorliegenden Erfindung ist es demgegenüber, einen Porenbeton sowie ein Verfahren zu seiner Herstellung bereitzustellen, die die oben genannten Nachteile vermeiden.

Diese Aufgabe wird erfindungsgemäß mit einem Porenbeton mit den Merkmalen des Anspruchs 1 sowie einem Verfahren zur Herstellung von Porenbeton mit den Merkmalen des Anspruchs 7 gelöst.

Der Erfindung liegt dabei der Gedanke zugrunde, dass die teilweise Substitution von fein aufgemahlenem Quarzmehl durch vergleichsweise groben Quarzsand eine Minimierung der Herstellungskosten von Porenbeton erlaubt. Erfindungsgemäß wird der Anteil der Quarzkörner im Feststoffsteggerüst des Porenbetons jedoch soweit begrenzt, dass kein Stützkorngefüge entstehen kann, das Wärmebrücken erzeugt, die dann zu einer signifikanten Erhöhung der Wärmeleitfähigkeit führen würden. Auf diese Weise ist es möglich, einen Porenbeton bereitzustellen, der bei geringeren Herstellungskosten eine Steindruckfestigkeit von 2,5 bis 3,5 N/mm², eine Wärmeleitfähigkeit von 0,075 bis 0,1 W/mK sowie eine Rohdichte zwischen 300 und 400 kg/m³ erzielt.

Überraschend wurde dabei festgestellt, dass sich auch Quarzsand mit vergleichsweise großen Quarzkörnern, d.h. mit einem mittleren Korndurchmesser d₅₀ zwischen 0,4 und 0,6 mm für die Herstellung von Porenbeton eignet, ohne sich negativ auf die Verarbeitbarkeit bei der Herstellung auszuwirken. Der mittlere Korndurchmesser d₅₀ wird dabei als ein Kennwert für die Größe von Quarzsand verstanden, bei welchem 50% der Quarzkörner einen kleineren Korndurchmesser als dieser mittlere Korndurchmesser aufweisen. Mit anderen Worten liegen bei einem Quarzsand mit einem mittleren Korndurchmesser d₅₀ zwischen 0,4 und 0,6 mm auch Quarzkörner vor, die einen deutlich größeren Korndurchmesser als 0,4 bis 0,6 mm aufweisen.

Nach einer bevorzugten Ausführungsform der Erfindung entspricht der Porenbeton der Festigkeitsklasse 2, d.h. einer Steindruckfestigkeit von wenigstens 2,5 N/mm², wobei die Wärmeleitfähigkeit höchstens 0,09 W/mK, insbesondere höchstens 0,08 W/mK beträgt. Die mittlere Rohdichte kann dabei bei etwa 350 kg/m³ liegen.

Es hat sich herausgestellt, dass die Produkteigenschaften des Porenbetons besonders gut sind, wenn das Feststoffsteggerüst mehr als 10 Masse-% Quarzkörner aufweist. Insbesondere kann das Feststoffsteggerüst bis zu 15 Masse-% Quarzkörner aufweisen. Bei diesem Gehalt von Restquarzkörnern bleibt eine gute Verarbeitbarkeit der Mischung zur Herstellung des Porenbetons erhalten und die Wärmeleitfähigkeit kann gleichzeitig gering gehalten werden.

Vorzugsweise weist das Quarzmehl, insbesondere Quarzfeinstmehl, einen mittleren Korndurchmesser d₅₀ von unter 0,005 mm auf. Dagegen beträgt der mittlere Korndurchmesser d₅₀ des Quarzsands vorzugsweise zwischen 0,45 und 0,55 mm.

Um die Entstehung eines Stützkorngefüges aus Quarzsand mit entsprechenden Wärmebrücken zu vermeiden, wird es bevorzugt, wenn das Feststoffsteggerüst des Porenbetons einen hohen Anteil an Calciumsilikathydrat-Phasen, insbesondere einen hohen Anteil an 11 Å-Tobermorit, aufweist. Vorzugsweise enthält das Feststoffsteggerüst zwischen 45 und 65 Masse-%, insbesondere mehr als 50 Masse-%, 11 Å-Tobermorit.

Das erfindungsgemäße Verfahren zur Herstellung von Porenbeton erfolgt von der grundsätzlichen Vorgehensweise wie in dem oben genannten ,Handbuch Porenbeton' beschrieben. Mit anderen Worten wird zunächst eine wässrige, gießfähige Mischung aus mindestens einer hydrothermalreagierenden CaO-Komponente und mindestens einer hydrothermalreagierenden SiO₂-Komponente hergestellt und mit einem porenbildenden Treibmittel und/oder einem Schaum vermischt. Diese Mischung wird dann in eine, bspw. eingeölte, Form gegossen, in der die Mischung, vorzugsweise in einer Gärkammer, auftreibt. Dies kann bspw. durch die Reaktion von Aluminium-Partikeln mit der stark alkalischen Mischung unter Bildung von Wasserstoff erfolgen. Gleichzeitig steift der Porenbetonkuchen an, d.h. er erstarrt soweit, dass er anschließend mit gespannten Stahldrähten in Porenbetonelemente zerschnitten werden kann. Darauffolgend werden die geschnittenen Porenbetonelemente in einem Autoklaven hydrothermal gehärtet. Erfindungsgemäß werden mindestens zwei SiO₂-Komponenten zur Herstellung der wässrigen, gießfähigen Mischung eingesetzt, deren Mengen so gewählt sind, dass das Feststoffsteggerüst des fertigen Porenbetons zwischen 10 und 20 Masse-% Quarzkörner aufweist. Als SiO₂-Komponenten für die Herstellung der Mischung wird dabei erfindungsgemäß wenigstens ein Quarzmehl mit einem mittleren Korndurchmesser d₅₀ von unter 0,01 mm und wenigstens ein Quarzsand mit einem mittleren Korndurchmesser d₅₀ zwischen 0,4 und 0,6 mm eingesetzt.

Bezogen auf die trockene Mischung kann diese etwa 10 bis etwa 20 Masse-%, insbesondere etwa 14 bis etwa 16 Masse-%, Kalk, etwa 10 bis etwa 30 Masse-%, insbesondere etwa 24 bis etwa 26 Masse-%, Zement, etwa 1 bis etwa 5 Masse-%, insbesondere etwa 2 bis etwa 3 Masse-%, Anhydrit, etwa 20 bis 40 Masse-%, insbesondere etwa 24 bis etwa 28 Masse-%, Quarzmehl, etwa 4 bis etwa 10 Masse-%, insbesondere etwa 5 bis etwa 8 Masse-%, Quarzsand, 0 bis etwa 15 Masse-%, insbesondere etwa 4 bis etwa 10 Masse-%, Porenbetonmehl sowie 0 bis etwa 25 Masse-%, insbesondere etwa 10 bis etwa 20 Masse-% Rückschlamm, d.h. in Wasser dispergierte ungehärtete Produktionsabschnitte, und etwa 0,05 bis 2 Masse-% Aluminiumpaste aufweisen.

Bei der Verwendung von Portland-Zement wird ein niedriger Kaliumgehalt von weniger als 0,8 Masse-%, insbesondere weniger als 0,5 Masse-% bevorzugt. Die Mischung zur Herstellung von Porenbeton kann mit einem Wasser-Feststoff-Verhältnis von 0,8 bis 1,05, insbesondere von 0,9 bis 1,0, erzeugt werden. Das Verhältnis der CaO-Komponente zu den SiO₂-Komponenten beträgt vorzugsweise zwischen etwa 0,65 und etwa 0,85, insbesondere zwischen 0,7 und 0,6. Das Verhältnis zwischen Zement und Kalk liegt vorzugsweise zwischen etwa 1,6 und etwa 1,8, bspw. zwischen 1,7 und 1,76.

Überraschenderweise wurde festgestellt, dass bei dem erfindungsgemäßen Verfahren im Vergleich zu anderen Porenbetonrezepturen die Standzeiten während des Treibprozesses und des Ansteifens des Porenbetonkuchens gering gehalten werden können. So beträgt die Standzeit vorzugsweise zwischen etwa 100 Minuten und etwa 140 Minuten, bspw. etwa 120 Minuten. Dies resultiert in kürzeren Taktzeiten bei der Herstellung von Porenbeton.

Ein weiterer Vorteil der Verwendung von Quarzsand in Kombination mit Quarzmehl ist, dass die chemischen Reaktionen teilweise langsamer bzw. träger verlaufen und hierdurch das zum Zuschneiden des Porenbetonkuchens in Porenbetonelemente zur Verfügung stehende Zeitfenster etwas größer wird. Dies erleichtert die Bearbeitung des Porenbetonkuchens bei der Herstellung von Porenbetonelementen.

Das Autoklavieren findet nach einer bevorzugten Ausführungsform bei etwa 10 bis etwa 14 bar_{abs}, vorzugsweise zwischen 12 und 13 bar_{abs}, und einer Temperatur von 180 bis 200°C, insbesondere 185 bis 190°C, unter Sattdampfbedingungen statt. Es hat sich herausgestellt, dass neben dem kostenintensiveren Einsatz von reinem Frischdampf beim Autoklavieren zumindest teilweise auch Überlassdampf eingesetzt werden kann. Bei dem erfindungsgemäßen Verfahren konnte zudem gegenüber anderen Porenbetonrezepturen die für die hydrothermale Härtung im Autoklaven benötigte Zeitspanne um etwa 5% verringert werden. Dies bringt eine weitere Zeit- und Kostenersparnis bei der Herstellung von Porenbeton mit sich.

Bei der Herstellung der Mischung hat es sich als besonders vorteilhaft erwiesen, wenn zunächst die Flüssigkeiten und Schlämme miteinander vermischt werden, erst danach das Quarzmehl zugegeben wird und danach der gröbere Quarzsand zugegeben wird. Hierdurch lässt sich die Mischzeit gegenüber anderen Porenbetonrezepturen optimieren.

Die Erfindung wird nachfolgend anhand eines Ausführungsbeispiels näher erläutert.

Zur Herstellung von Porenbeton-Plansteinen wurde in acht Chargen jeweils zunächst eine wässrige, gießfähige Mischung aus Wasser und den in Anspruch 8 genannten Komponenten hergestellt. Hierbei wurde als Kalk der Branntkalk CL90 eingesetzt. Als Zement wurde ein Portland-Zement vom Typ CEM I 52,5 N eingesetzt. Ferner wurde ein Natur-Anhydrit sowie Porenbetonmehl verwendet. Zusätzlich wurde als Treibmittel Aluminium-Paste (grobe und feine Type) verwendet. Das eingesetzte Quarzfeinstmehl wies einen mittleren Korndurchmesser d₅₀ von unter 0,005 mm auf. Als Quarzsand wurde ein Sand mit einem mittleren Korndurchmesser d₅₀ von etwa 0,5 mm eingesetzt. Als Rückschlamm wurden eigene ungehärtete Produktionsabschnitte aus der Herstellung von Porenbeton der Druckfestigkeitsklasse 2 eingesetzt.

Für den Treibprozess wurden der Mischung aus etwa 1400 l Wasser, Kalk, Zement, Anhydrit, Quarzmehl, Quarzsand, Porenbetonmehl und Rückschlamm etwa 30 kg einer Aluminium-Suspension zugegeben und mit den übrigen Komponenten vermischt. Der Treibvorgang war nach weniger als 60 Minuten abgeschlossen und nach weniger als 180 Minuten hatte der Porenbetonkuchen seine Schneidfestigkeit erreicht. Die hydrothermale Härtung des Porenbetonkuchens erfolgte nach Zerschneiden in die endgültigen Steinformate in einem Autoklaven bei 13 bar_{abs} und 192°C unter Sattdampfbedingungen. Die so erhaltenen Porenbeton-Plansteine wurden daraufhin untersucht.

Die Plansteine aus den acht Chargen wiesen die in der nachfolgenden Tabelle wiedergegebenen Kennwerte für die mittlere Steindruckfestigkeit σ (Einheit N/mm²), für die mittlere Rohdichte ρ (Einheit kg/dm³), für die Wärmeleitfähigkeit λ (Einheit W/mK) sowie für den Restquarzgehalt RQ (Einheit Masse-%) auf.

| | **Ch. 1** | **Ch. 2** | **Ch. 3** | **Ch. 4** | **Ch. 5** | **Ch. 6** | **Ch. 7** | **Ch. 8** | **Ø** |
|---|---|---|---|---|---|---|---|---|---|
| **σ** | 3,05 | 2,95 | 2,89 | 2,67 | 2,72 | 2,82 | 2,97 | 3,11 | 2,90 |
| **ρ** | 361 | 354 | 350 | 358 | 355 | 352 | 362 | 373 | 358 |
| **λ** | 0,0828 | 0,0817 | 0,0856 | 0,0828 | 0,0839 | 0,0852 | 0,0832 | 0,082 | 0,0842 |
| **RQ** | 12,1 | 10,0 | 10,7 | 10,9 | 11,5 | 10,2 | 12,5 | 10,8 | 11,09 |

Zur Bestimmung des Quarzgehalts RQ wurden Proben der PorenbetonPlansteine aufgemahlen und dann einer Röntgenpulverdiffraktometrie sowie einer anschließenden Rietveld-Analyse unterzogen. Die Genauigkeit der Röntgenpulverdiffraktometrie und der anschließenden Rietveld-Analyse betrug +/-1,3 Masse-% bei den Quarzkörnern. Alternativ zu der Röntgenpulverdiffraktometrie und der Rietveld-Analyse ist auch eine Restquarzbestimmung als Salzsäure-unlöslicher Rückstand möglich. Diese alternative Bestimmungsmethode ist jedoch teilweise weniger genau als die zuvor genannte Methode.

Für die Mineralphasen-Bestimmung wird eine getrocknete, repräsentative Porenbeton-Probe grob mit einem Hammer vorzerkleinert, danach 30 Sekunden in einer Scheibenschwingmühle mit Wolframcarbid-Einsatz vorgemahlen und anschließend in einer McCrone-Mühle mit wasserfreiem Ethanol 12 Minuten gemahlen. Die quantitative Bestimmung der Mineralphasen erfolgt dann mittels Röntgendiffraktometrie mit externem Standard und Rietveld-Analyse.

Als Vergleichsbeispiel wurde ein Porenbeton aus den oben genannten Rohstoffen in dem in Anspruch 8 genannten Verhältnis hergestellt, wobei jedoch das Quarzfeinstmehl und der Quarzsand durch Sandschlamm ersetzt wurden. Es zeigte sich, dass der Treibvorgang und das Ansteifen länger dauerten als bei dem erfindungsgemäßen Beispiel. Nach der hydrothermalen Härtung des Porenbetonkuchens wurden erneut die oben genannten Kennwerte ermittelt. Bei identischer Rohdichte lag die mittlere Steindruckfestigkeit σ mit etwa 2,5 N/mm² in nur geringfügig unter den Werten des erfindungsgemäßen Beispiels. Die Wärmeleitfähigkeit λ war auf 0,09 W/mK angestiegen. Der Restquarzgehalt RQ lag bei etwa 16 Masse-%.

## Patentansprüche

1. Porenbeton mit einem Feststoffsteggerüst, das aus einem Schaum resultierende oder durch einen Treibprozess erzeugte Poren umgibt, wobei der Porenbeton eine Steindruckfestigkeit von 2,0 bis 3,5 N/mm², eine Wärmeleitfähigkeit von 0,075 bis 0,1 W/mK sowie eine Rohdichte zwischen 300 und 400 kg/m³ aufweist, **dadurch gekennzeichnet, dass** das Feststoffsteggerüst mehr als 10 und bis zu 20 Masse-% Quarzkörner aufweist, von denen ein Teil Quarzmehl mit einem mittleren Korndurchmesser (d₅₀) von unter 0,1 mm und ein Teil Quarzsand mit einem mittleren Korndurchmesser (d₅₀) zwischen 0,4 und 0,6 mm ist.

2. Porenbeton nach Anspruch 1, **gekennzeichnet durch** eine Steindruckfestigkeit von wenigstens 2,5 N/mm² und eine Wärmeleitfähigkeit von höchstens 0,08 W/mK.

3. Porenbeton nach Anspruch 1 oder 2, **dadurch gekennzeichnet, dass** das Feststoffsteggerüst bis zu 15 Masse-% Quarzkörner aufweist.

4. Porenbeton nach einem der vorhergehenden Ansprüche, **dadurch gekennzeichnet, dass** das Quarzmehl einen mittleren Korndurchmesser (d₅₀) von unter 0,005 mm aufweist.

5. Porenbeton nach einem der vorhergehenden Ansprüche, **dadurch gekennzeichnet, dass** der Quarzsand einen mittleren Korndurchmesser (d₅₀) zwischen 0,45 und 0,55 mm aufweist.

6. Porenbeton nach einem der vorhergehenden Ansprüche, **dadurch gekennzeichnet, dass** das Feststoffsteggerüst zwischen 45 und 65 Masse-% 11 Å-Tobermorit aufweist.

7. Verfahren zur Herstellung von Porenbeton nach einem der vorhergehenden Ansprüche, mit folgenden Schritten:
a) Herstellen einer wässrigen, gießfähigen Mischung aus mindestens einer CaO-Komponente, mindestens zwei SiO₂-Komponenten und mindestens einem Treibmittel,
b) Gießen der Mischung in eine Form und Treiben der Mischung zu einem erstarrten Porenbetonkuchen,
c) Zuschneiden des Porenbetonkuchens in Porenbetonelemente und
d) Autoklavieren der Porenbetonelemente,
**dadurch gekennzeichnet, dass** die Menge der SiO₂-Komponenten so gewählt ist, dass das Feststoffsteggerüst des Porenbetons nach Schritt d) mehr als 10 und bis zu 20 Masse-% Quarzkörner aufweist, wobei die SiO₂-Komponenten wenigstens ein Quarzmehl mit einem mittleren Korndurchmesser (d₅₀) von unter 0,1 mm und wenigstens einen Quarzsand mit einem mittleren Korndurchmesser (d₅₀) zwischen 0,4 und 0,6 mm aufweisen.

8. Verfahren nach Anspruch 7, **dadurch gekennzeichnet, dass** in Schritt a) eine Mischung aus
10 bis 20 Masse-%, insbesondere 14 bis 16 Masse-%, Kalk,
20 bis 30 Masse-%, insbesondere 24 bis 26 Masse-%, Zement,
1 bis 5 Masse-%, insbesondere 2 bis 3 Masse-%, Anhydrit,
20 bis 40 Masse-%, insbesondere 24 bis 28 Masse-%, Quarzmehl,
4 bis 10 Masse-%, insbesondere 5 bis 8 Masse-%, Quarzsand,
0 bis 15 Masse-%, insbesondere 4 bis 10 Masse-%, Porenbetonmehl,
0 bis 25 Masse-%, insbesondere 10 bis 20 Masse-%, Rückschlamm,
0,05 bis 2 Masse-% Aluminiumpaste,
jeweils bezogen auf die trockene Mischung erzeugt wird.

9. Verfahren nach Anspruch 7 oder 8, **dadurch gekennzeichnet, dass** in Schritt a) eine Mischung mit einem Wasser-Feststoff-Verhältnis von 0,8 bis 1,05, insbesondere von 0,9 bis 1,0, erzeugt wird.

10. Verfahren nach einem der Ansprüche 7 bis 9, **dadurch gekennzeichnet, dass** das Autoklavieren in Schritt d) bei 10 bis 14 bar_{abs} und einer Temperatur von 180 bis 195° C, insbesondere 185 bis 190° C, unter Sattdampfbedingungen erfolgt.

## Claims

1. A porous concrete having a solids web structure which surrounds pores resulting from a foam or produced by a propellant process, wherein the porous concrete has a block compression strength of 2.0 to 3.5 N/mm², a thermal conductivity of 0.075 to 0.1 W/mK and a bulk density of between 300 and 400 kg/m³, **characterized in that** the solids web structure has more than 10 and up to 20% by weight silica granules, of which a proportion is ground silica with an average grain diameter (d₅₀) of under 0.1 mm and a proportion is silica sand with an average grain diameter (d₅₀) of between 0.4 and 0.6 mm.

2. The porous concrete according to claim 1, **characterized by** a block compression strength of at least 2.5 N/mm² and a thermal conductivity of at most 0.08 W/mK.

3. The porous concrete according to claim 1 or 2, **characterized in that** the solids web structure has up to 15 % by weight silica granules.

4. The porous concrete according to one of the preceding claims, **characterized in that** the ground silica has an average grain diameter (d₅₀) of under 0.005 mm.

5. The porous concrete according to one of the preceding claims, **characterized in that** the silica sand has an average grain diameter (d₅₀) of between 0.45 and 0.55 mm.

6. The porous concrete according to one of the preceding claims, **characterized in that** the solids web structure has between 45 and 65 % by weight 11 Å tobermorite.

7. A method for the production of porous concrete according to one of the preceding claims, involving the following steps:
a) production of an aqueous, pourable mixture of at least one CaO component, at least two SiO₂ components and at least one propellant,
b) pouring of the mixture into a mould and forcing the mixture into a solidified porous concrete cake,
c) cutting of the porous concrete cake into porous concrete elements and
d) autoclaving of the porous concrete elements,
**characterized in that** the quantity of SiO₂ components is chosen in such a way that the solids web structure of the porous concrete according to step d) has more than 10 and up to 20 % by weight silica grains, wherein the SiO₂ components have at least one ground silica with an average grain diameter (d₅₀) of under 0.1 mm and at least one silica sand with an average grain diameter (d₅₀) of between 0.4 and 0.6 mm.

8. The method according to claim 7, **characterized in that** in step a) a mixture of
10 to 20 % by weight, in particular 14 to 16 % by weight, chalk,
20 to 30 % by weight, in particular 24 to 26 % by weight, cement,
1 to 5 % by weight, in particular 2 to 3 % by weight, anhydrite,
20 to 40 % by weight, in particular 24 to 28 % by weight, ground silica,
4 to 10 % by weight, in particular 5 to 8 % by weight, silica sand,
0 to 15 % by weight, in particular 4 to 10 % by weight, porous ground concrete,
0 to 25 % by weight, in particular 10 to 20 % by weight, recirculated sludge,
0.05 to 2 % by weight aluminium paste,
is produced relative to the dry mixture in each case.

9. The method according to claim 7 or 8, **characterized in that** in step a) a mixture with a water/solid ratio of 0.8 to 1.05, in particular of 0.9 to 1.0, is produced.

10. The method according to one of claims 7 to 9, **characterized in that** the autoclaving in step d) takes place at 10 to 14 bar_{abs} and a temperature of 180 to 195 °C, in particular 185 to 190 °C, under saturated steam conditions.

## Revendications

1. Béton cellulaire avec une armature en barre solide, qui entoure des pores résultant d'une mousse ou créés par un processus de poussée, le béton cellulaire faisant preuve d'une résistance à la compression de 2,0 à 3,5 N/mm², d'une conductibilité thermique de 0,075 à 0,1 W/mK, ainsi que d'une masse volumique apparente comprise entre 300 et 400 kg/m³, **caractérisé en ce que** l'armature en barre solide comporte plus de 10 % et jusqu'à 20 % en masse de grains de quartz dont une partie est de la poudre de quartz avec un diamètre moyen des grains (d₅₀) inférieur à 0,1 mm et une partie est du sable quartzeux avec un diamètre moyen des grains (d₅₀) compris entre 0,4 et 0,6 mm.

2. Béton cellulaire selon la revendication 1, **caractérisé par** une résistance à la compression d'au moins 2,5 N/mm² et une conductibilité thermique d'au plus 0,08 W/mK.

3. Béton cellulaire selon la revendication 1 ou 2, **caractérisé en ce que** l'armature en barre solide comporte jusqu'à 15 % en masse de grains de quartz.

4. Béton cellulaire selon l'une quelconque des revendications précédentes, **caractérisé en ce que** la poudre de quartz présente un diamètre moyen des grains (d₅₀) de moins de 0,005 mm.

5. Béton cellulaire selon l'une quelconque des revendications précédentes, **caractérisé en ce que** le sable quartzeux présente un diamètre moyen des grains (d₅₀) compris entre 0,45 et 0,55 mm.

6. Béton cellulaire selon l'une quelconque des revendications précédentes, **caractérisé en ce que** l'armature en barre solide comporte entre 45 et 65 % en masse de 11 Å tobermorite.

7. Procédé, destiné à fabriquer un béton cellulaire selon l'une quelconque des revendications précédentes, comportant les étapes suivantes :
a) de la préparation d'un mélange aqueux, susceptible de couler à partir d'au moins un composant CaO, d'au moins deux composants SiO₂ et d'au moins un agent porogène,
b) de la coulée du mélange dans un moule et de la poussée du mélange en un gâteau de béton cellulaire figé,
c) de la découpe du gâteau de béton cellulaire figé en éléments en béton cellulaire et du passage à l'autoclave des éléments en béton cellulaire,
**caractérisé en ce que** la quantité des composants SiO₂ est choisie de telle sorte que l'armature en barre solide du béton cellulaire comporte après l'étape d) plus de 10 % et jusqu'à 20 % en masse de grains de quartz, les composants SiO₂ comportant au moins une poudre de quartz avec un diamètre moyen des grains (d₅₀) de moins de 0,1 mm et au moins un sable quartzeux avec un diamètre moyen des grains (d₅₀) compris entre 0,4 et 0,6 mm.

8. Procédé selon la revendication 7, **caractérisé en ce que** dans l'étape a), on créé un mélange de
10 à 20 % en masse, notamment de 14 à 16 % en masse de chaux,
0 à 30 % en masse, notamment de 24 à 26 % en masse de ciment
1 à 5 % en masse, notamment de 2 à 3 % en masse d'anhydrite,
20 à 40 % en masse, notamment de 24 à 28 % en masse de poudre de quartz,
4 à 10 % en masse, notamment de 5 à 8 % en masse de sable quartzeux,
0 à 15 % en masse, notamment de 4 à 10 % en masse de matériau en béton poreux,
0 à 25 % en masse, notamment de 10 à 20 % en masse de boue recyclée,
0,05 à 2 % en masse de pâte d'aluminium,
chaque fois en rapport au mélange sec.

9. Procédé selon la revendication 7 ou 8, **caractérisé en ce que** dans l'étape a), on prépare un mélange présentant un rapport eau/matière solide de 0,8 à 1,05, notamment de 0,9 à 1,0.

10. Procédé selon l'une quelconque des revendications 7 à 9, **caractérisé en ce que** le passage à l'autoclave dans l'étape d) s'effectue à de 10 à 14 bar_{abs} et à une température de 180 à 195 °C, notamment de 185 à 190 °C sous des conditions de vapeur saturante.
